# EUROPEAN PATENT APPLICATION

(11) **EP 3 744 446 A1**
(43) Date of publication of application: **02.12.2020**
(21) Application number: 20176941.1
(22) Date of filing: 27.05.2020
(51) Int. Cl.: B22F 3/105, B22F 3/24, B33Y 10/00, B33Y 40/20

(54) **METHOD AND SYSTEM FOR REMOVING RESIDUAL POWDER FROM AN ADDITIVELY MANUFACTURED ARTICLE**

(30) Priority: 29.05.2019 US 201916424812
(71) Applicant: Raytheon Technologies Corporation, Farmington, CT 06032 (US)
(72) Inventor: MORGANSON, David W., Marlborough, CT 06447 (US); GUSTAFSON, Brendan T., Vernon, CT 06066 (US)
(74) Representative: Dehns

(57) **Abstract**

A method for removing a residual powder from an internal compartment (102, 104) of an additively manufactured article (100) includes discharging a first burst of pressurized fluid into the internal compartment (102, 104) through a first end, and vacating at least a portion of the residual powder through a second end valve (126) at a second end.

## Description

### TECHNICAL FIELD

The present disclosure relates generally to additive manufacturing processes, and more specifically to a process for removing residual powder from an additively manufactured article.

### BACKGROUND

Additive manufacturing creates three dimensional structures by iteratively building layers on top of each other. The resultant structure can include openings and internal passages in some examples. Some additive manufacturing processes, such as a laser powder bed fusion process, operate by applying energy to a powder bed, causing a portion of the powder to harden into each layer. As an end result of this process, internal passages and compartments that are constructed can include some amount of unutilized powder. The unutilized powder is referred to as residual powder. In some applications, it is undesirable for the residual powder to remain in the internal compartments or passages.

In order to remove the residual powder from internal passages, typical powder removal structures involve vibrating the additively manufactured component while passing a steady stream of compressed gas through the passage that the powder is being removed from. This process can be incomplete and relies on the operator to pay attention to up to hundreds of passageways depending on the specific structure of the additively manufactured article. In addition, when multiple pathways are available, the stream of compressed gas routes through the passage of least resistance and can result in one or more passages remaining blocked via the residual powder.

### SUMMARY OF THE INVENTION

According to a first aspect, there is provided a method for removing a residual powder from an internal compartment of an additively manufactured article includes discharging a first burst of pressurized fluid into the internal compartment through a first end, and vacating at least a portion of the residual powder through a second end valve at a second end.

Another example of the above described method for removing a residual powder from an internal compartment of an additively manufactured article further includes discharging a second burst of pressurized fluid into the internal compartment through the second end and vacating at least a second portion of the residual powder through a first end valve.

Another example of any of the above described methods for removing a residual powder from an internal compartment of an additively manufactured article further includes closing the second end valve and opening the first end valve prior to discharging the second burst.

In another example of any of the above described methods for removing a residual powder from an internal compartment of an additively manufactured article the first burst and the second burst are approximately the same.

In another example of any of the above described methods for removing a residual powder from an internal compartment of an additively manufactured article discharging the first burst of pressurized fluid into the internal compartment pressurizes a fluid disposed between particles in a residual powder clog.

In another example of any of the above described methods for removing a residual powder from an internal compartment of an additively manufactured article a spring back force at least partially disrupts the clog after the first burst ends.

Another example of any of the above described methods for removing a residual powder from an internal compartment of an additively manufactured article further includes recharging a pressurized fluid storage tank after discharging the first burst of pressurized fluid.

In another example of any of the above described methods for removing a residual powder from an internal compartment of an additively manufactured article the first burst of pressurized fluid has a duration of at most 0.5ms.

In another example of any of the above described methods for removing a residual powder from an internal compartment of an additively manufactured article the first burst of pressurized fluid has a pressure greater than 80Psi.

In another example of any of the above described methods for removing a residual powder from an internal compartment of an additively manufactured article the pressurized fluid is a compressed gas.

According to a further aspect, there is provided a system for removing powder from an internal cavity, the system including at least a first joint having a first fluid reservoir and a first discharge valve, at least a second joint having a second fluid reservoir and a second discharge valve, a controller configured to cause each of the first fluid reservoir and the second fluid reservoir to discharge bursts of pressurized fluid, and configured to control an open/closed state of each of the valves.

In another example of the above described system for removing powder from an internal cavity each of the first fluid reservoir and the second fluid reservoir is sized to store at least as much pressurized fluid as an expected volume of the internal cavity.

In another example of any of the above described systems for removing powder from an internal cavity each of the first discharge valve and the second discharge valve is at least as a largest expected particle powder thereby allowing residual powder dislodged from the internal cavity to pass through the first discharge valve and the second discharge valve.

In another example of any of the above described systems for removing powder from an internal cavity the controller includes instructions for causing the first fluid reservoir to discharge a first burst of pressurized fluid into the internal compartment through a first end of the internal cavity and vacate at least a portion of a residual powder through the second discharge valve.

In another example of any of the above described systems for removing powder from an internal cavity the controller includes instructions for causing the second fluid reservoir to discharge a second burst of pressurized fluid into the internal compartment through a second end of the internal cavity and vacate at least a portion of the residual powder through the first discharge valve.

These and other features of the present invention can be best understood from the following specification and drawings, the following of which is a brief description.

### BRIEF DESCRIPTION OF THE DRAWINGS

Figure 1 illustrates an exemplary additive manufacturing machine according to a first example.
Figure 2 schematically illustrates an exemplary additively manufactured component connected to a residual powder removal system.
Figure 3 illustrates a flowchart of the process for dislodging residual powder from interior cavities within an additively manufactured component.
Figures 4A-4C schematically illustrate a residual powder removal process applied to an additively manufactured component.
Figure 5 schematically illustrates the system of Figure 2 applied to an additive manufacturing component including at least one blind cavity.

### DETAILED DESCRIPTION

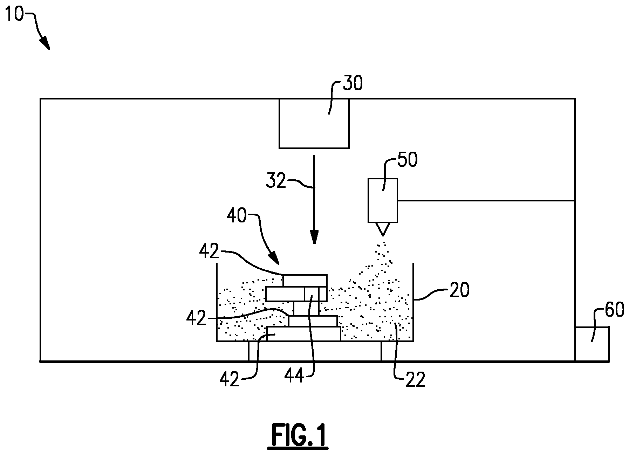

Figure 1 schematically illustrates an exemplary additive manufacturing machine 10. The additive manufacturing machine 10 includes a powder bed 20 holding a component powder 22. An energy source 30, such as a laser, is disposed above the powder bed 20 and is configured to direct energy 32 to specific locations within the powder bed 20, causing the powder 22 to solidify into layers 42 of an additively manufactured component 40 at the specific locations. In the exemplary additively manufacture component 42, an internal passage 44 is formed. In alternative additively manufactured components, such as heat exchangers and the like, the additively manufactured component 40 can include substantially more internal passages 44. A powder source 50 dispenses powder 22 into the powder bed 20 as needed to support the additive manufacturing operation. In the illustrated example, a controller 60 is connected to the additive manufacturing machine 10 and controls the operation of the machine 10.

As a result of the manufacturing process, the component 40 is constructed around the powder 22, and residual powder is disposed in the passage(s) 44 when the component 40 is complete. Removal of the residual powder is tricky using existing methods, particularly for components 40 that include multiple parallel passages, headers at multiple ends of the passages, or both. One such example is a heat exchanger, which can include up to hundreds of parallel passages.

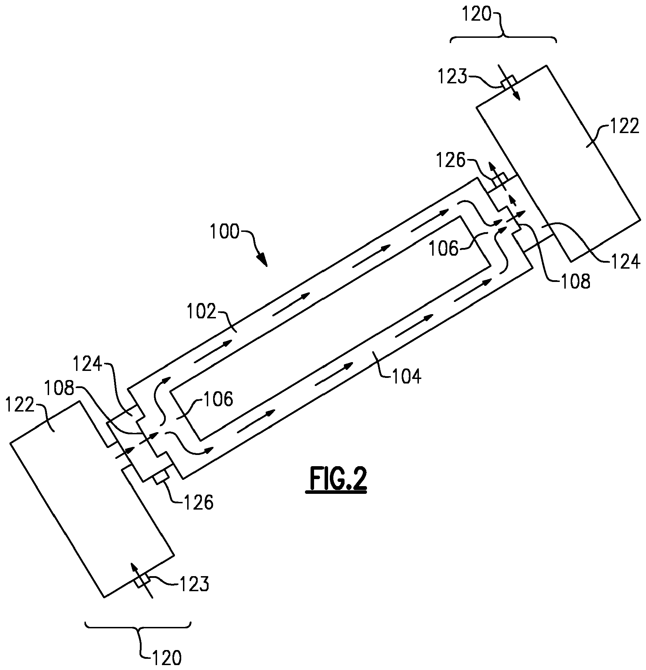

With continued reference to Figure 1, Figure 2 schematically illustrates a cross section of an exemplary additively manufactured component 100. The additively manufactured component 100 includes multiple parallel passages 102, 104 at the illustrated cross section and can include any number of additional parallel passages into or out of the image. Each end of the parallel passages 102, 104 includes a header 106 and a corresponding opening 108. In alternative examples, one end can be entirely closed off, and the opening 108 at the closed off end can be omitted. In yet further alternatives, the passages 102, 104 can have more than two ends, such as in a delta shape, or a serpentine curve, and a header and opening can be included at every end.

Connected to the component 100 is a residual powder removal system 120. The residual powder removal system includes a pair of fluid storage tanks 122 connected to a corresponding header 106 via a joint 124. Each of the joints 124 includes a valve 126, and each of the valves 126 can be placed in either an open or a closed state. The valves 126 are high volume exhaust valves, and are sufficiently sized to allow residual powder particles to pass through the valve 126. Each of the fluid storage tanks 122 acts as a repository for pressurized fluid such as a compressed gas or a pressurized liquid, and can be charged through one or more corresponding charge ports 123. In alternative examples, the fluid storage tanks 122 can be replaced with a direct connection to a compressor, or other system for providing the pressurized fluid. The fluid storage tanks 122 are, in one example, sized to hold a sufficient amount of pressurized fluid to overwhelm the capacity of the internal passages 102, 104 in a single charge. In other examples, the fluid storage tanks 122 can be recharged between bursts and can be sized smaller.

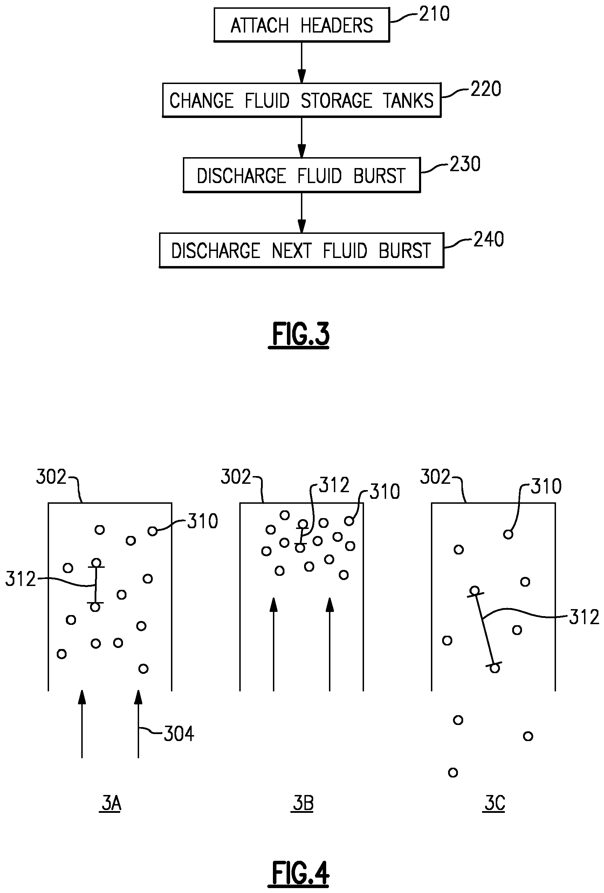

With continued reference to Figure 2, Figure 3 illustrates a process for removing the residual powder from the passages 102, 104 within the component 100. Initially, the joints are connected to each end of the component 100, such that each opening 108 of the component 100 includes a joint, in an "Attach Joints" step 210. While illustrated in the example component 100 as including two openings 108, and thus two joints, it is appreciated that any number of joints could be incorporated depending on the number of openings 108.

Once attached, a controller or operator ensures that each of the valves 126 is closed and charges the fluid storage tanks 122 with a pressurized fluid in a "Charge Fluid Storage Tanks" step 220. The pressurized fluid can include any fluid, such as air, an inert gas, water, and the like. After each of the fluid storage tanks 122 is sufficiently charged (filled) with the pressurized fluid, the controller or operator opens a valve 126 at one opening 108, and discharges a burst of pressurized fluid from a fluid storage tank 122 at a different end of the component 100 in a "Discharge Fluid Burst" step 230. In some examples, the burst of pressurized fluid refers to a pressurized discharge that is less than 0.5s in duration. The burst has a fluid dispersal rate sufficient that a single burst is able to pressurize the passage 102, 104 or cavity being cleared to within 75% of a desired passage 102, 104 or cavity pressure. The desired pressure is the amount of pressure required to establish a spring back effect described with regards to Figure 4 and can be determined and controlled according to known procedures. In some examples, the entirety of a fluid storage tank 122 is discharged in a single burst. In other examples, the tank can be controlled to discharge multiple bursts on a single charge.

The burst of discharged fluid purges at least a portion of the residual powder in the passage 102, 104 by forcing the powder to pass through the opening 108 and through the discharge valves 126 at the opposite end. In order to fully discharge the powder, after the discharge the valve 126 that is opened is transitioned to closed, and another valve 126 is opened. Once the valve 126 states have been switched, the fluid storage tanks 122 corresponding to the ends that do not include an open valve are controlled to discharge a burst of fluid in a "Discharge Next Fluid Burst" step 240. During the discharge next fluid burst step 240, the first fluid storage tank 122 can be recharged, allowing for continued iteration of the steps when the tank size is such that additional bursts are required.

Each burst of the pressurized fluid causes a portion of the residual powder in the passages 102, 104 to be dislodged and passed out of the corresponding opening 108. The utilization of short, high pressure, bursts instead of a sustained low pressure flow allows for additional dislodging of the powder by pressurizing the fluid between the particles of the powder, and causing a spring back force when the burst ends. As the pressure is applied on initial contact from the short burst, rather than over time from a sustained low pressure flow, blockages within one or more parallel passages are not routed around, and blockages can be more easily cleared than in previous examples. In addition, utilization of the spring back force due to pressurization of the fluid between the particles to dislodge blockages also allows for the removal of powder from dead ends and/or sharp corners within an internal passage.

With continued reference to Figures 1-3, Figures 4A, 4B and 4C schematically illustrate a spring back effect dislodging powder particles 310 from a dead end 320. Figure 4A illustrates the dead end 302 immediately prior to the high pressure burst 304 reaching the particles. The particles 310 are spaced out by a distance 312 between each of the particles 310. With some powder types, the distance 312 between particles will be uniform, while in other powder types the distance 312 is non uniform.

Figure 4B illustrates the powder particles 310 after the burst of fluid 304 has reached the particles 310. The pressure from the burst compresses the distance 312 between the particles causing a pressure buildup between the particles at the dead end 302. Figure 4C illustrates the particles 310 after the burst has ceased. When the burst stops, the pressure buildup between the particles causes a spring back force spreading the particles 310 out again and dislodging some or all of the particles 310 from the dead end 302. When only a portion of the particles 310 are removed via a burst, the burst can be repeated, allowing repeated application of the spring back forces.

While illustrated specifically in a dead end 302, it is further understood that the application of the burst of pressurized fluid and spring back forces of the compressed fluid between the particles 310 can be utilized in the removal of clogs in a continuous passage in the same manner. When applied to a dead end 302, or any other blind passage 102, 104 or cavity, the process described at Figure 3 is modified to add a delay in between the discharge fluid burst step 230 and the discharge next fluid burst step 240, as well as between the discharge next fluid burst step 240 and the reiteration. The delay allows for the spring back force described above to force residual powder back through the valve of the header providing the burst, thereby allowing for the residual powder to vacate the cavity.

In addition to compressing, or pressurizing, the space between particles a similar effect is achieved when the particles are compressed against each other (e.g. the particles are in direct contact with each other). In such an example when either air or liquid pressure is applied by the burst, the particles compress and removal of the pressure causes the same spring back effect described above with regards to Figures 4A, 4B and 4C.

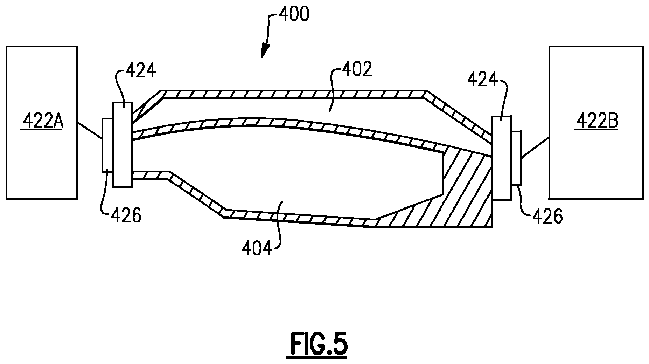

In some examples, an additively manufacture component can include some blind cavities, and some pass through cavities. Figure 5 illustrates one such example including a first passage 402, and a cavity 404. As with the example of Figure 2, a fluid storage tank 422 is positioned at each end of the additively manufactured component 400 and is connected to the passage 402 and cavity 404 via a joint 424 including a valve 426.

During operation, each of the fluid storage tanks 422 is connected to the corresponding end of the additively manufactured component 400, and are initially charged with pressurized fluid. Once charged, the first fluid storage tank 422A is released into the passage 402 and the cavity 404 for a burst duration. After the burst duration has elapsed, both valves 426 are opened and residual powder is allowed to evacuate through both valves from the passage 402 and through the valve 426 corresponding to the first fluid storage tank 422A from the cavity 402.

After the passage 402 and cavity 404 have depressurized, and spring back force has operated to remove some of the residual powder from the passage 402 and cavity 404, the system reiterates with the burst being provided by the second fluid storage tank 422B. In the second iteration, no fluid is provided to the blind cavity 404, since the end is closed off, and the burst operates identical to the burst described in the process of Figure 3. After the second iteration, the first and second iteration are cycled until a sufficient amount of the residual powder has been removed.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A method for removing a residual powder from an internal compartment of an additively manufactured article comprising:
discharging a first burst of pressurized fluid into the internal compartment through a first end, and vacating at least a portion of the residual powder through a second end valve at a second end.

2. The method of claim 1, further comprising discharging a second burst of pressurized fluid into the internal compartment through the second end and vacating at least a second portion of the residual powder through a first end valve.

3. The method of claim 2, further comprising closing the second end valve and opening the first end valve prior to discharging the second burst.

4. The method of claim 2 or 3, wherein the first burst and the second burst are approximately the same.

5. The method of any preceding claim, wherein discharging the first burst of pressurized fluid into the internal compartment pressurizes a fluid disposed between particles in a residual powder clog.

6. The method of claim 5, wherein a spring back force at least partially disrupts the clog after the first burst ends.

7. The method of any preceding claim, further comprising recharging a pressurized fluid storage tank after discharging the first burst of pressurized fluid.

8. The method of any preceding claim, wherein the first burst of pressurized fluid has a duration of at most 0.5ms.

9. The method of any preceding claim, wherein the first burst of pressurized fluid has a pressure greater than 80Psi.

10. The method of any preceding claim, wherein the pressurized fluid is a compressed gas.

11. A system for removing powder from an internal cavity, the system comprising:
at least a first joint having a first fluid reservoir and a first discharge valve;
at least a second joint having a second fluid reservoir and a second discharge valve;
a controller configured to cause each of the first fluid reservoir and the second fluid reservoir to discharge bursts of pressurized fluid, and configured to control an open/closed state of each of the valves.

12. The system of claim 11, wherein each of the first fluid reservoir and the second fluid reservoir is sized to store at least as much pressurized fluid as an expected volume of the internal cavity.

13. The system of claim 11 or 12, wherein each of the first discharge valve and the second discharge valve is at least as large as a largest expected particle powder thereby allowing residual powder dislodged from the internal cavity to pass through the first discharge valve and the second discharge valve.

14. The system of claim 11, 12 or 13, wherein the controller includes instructions for causing the first fluid reservoir to discharge a first burst of pressurized fluid into the internal cavity through a first end of the internal cavity and vacate at least a portion of a residual powder through the second discharge valve.

15. The system of claim 14, wherein the controller includes instructions for causing the second fluid reservoir to discharge a second burst of pressurized fluid into the internal cavity through a second end of the internal cavity and vacate at least a portion of the residual powder through the first discharge valve.
